# EUROPEAN PATENT SPECIFICATION

(11) **EP 2 243 378 B1**
(45) Date of publication and mention of the grant of the patent: **01.06.2011**
(21) Application number: 09015040.0
(22) Date of filing: 04.12.2009
(51) Int. Cl.: A23C 19/068, A01J 25/00

(54) **Method an plant for the continuous production with steam of a fresh pasta filata cheese like mozzarella and similar**
Verfahren und Anlage zur durchgehenden Herstellung mit Dampf eines Frischteigwaren-Filatakäses wie Mozzarella und dergleichen
Procédé et installation pour la production continue à la vapeur de fromage filé à pâte fraîche de type mozzarella et similaire

(30) Priority: 15.12.2008 IT CO20080035
(43) Date of publication of application: 27.10.2010
(73) Proprietor: Gruppo Smaic Macchinari Industriali S.r.l., 22078 Turate CO (IT)
(72) Inventor: Signoracci, Roberto, 22060 Carimate (CO) (IT)
(74) Representative: Zanella, Ireneo

(56) References cited:
- WO-A-2006/026811
- WO-A-2008/046080
- IT-A1- MI20 042 108
- US-A- 3 713 220
- US-A- 4 112 131
- US-A- 4 226 888
- US-A- 4 898 745
- US-A1- 2006 172 054

## Description

### Description of the inventino

### Field of the invention

The present invention relates to a method and a system for the continuous production with steam of fresh pasta filata cheese, like mozzarella and the like, according to the preambles of the claims 1 and 9.

### Background of the invention

It is known that during the artisan-like production of mozzarella the handling or manipulation of the curd, that is the squeezing-kneading and lengthening actions on the curd itself is carried out manually by the dairy-man directly on the curd in tubs as long as the fresh pasta filata cheese, that is the mozzarella or the like, is obtained.

Industrially, the mozzarella is produced by single spinning machines which work the curd introduced in the latter where by means of warm water or water steam the curd is brought to the temperature (of about 50-53°C) which is needed in order that said curd may be spun, wherein by means of a mechanical manipulation which is carried out by means of screws, revolving blades, immersed arms and the like the desired fresh pasta filata cheese is obtained.

To the prior art belong both spinning machines which work with water in a continuous manner as well as spinning machines working with water steam in a discontinuous manner as, for example, the spinning machines MF 500/2 of the applicant (Italian patent application MI2004A 002108).

In the continuous working spinning machines using water to the introduced curd warm water is added and then said curd is treated with screws, immersed arms and the like carrying out a transport, mixing, squeezing and kneading action, and the cheese at last obtained is discharged through an overflow, wherein the treating water, which is now rich in nourishing substances extracted from the curd and forming the so called "whey" has to be disposed by using special and costly procedures or has to be stocked in tanks and used for feeding pigs. Therefore, the nourishing substances of the curd which are dissolved into said whey impoverish the nutritious substances of the curd itself and, indirectly, of the produced cheese.

It is further stressed that the continuously melting spinning machines do not have a structure adapted to the production of fresh pasta filata cheese like mozzarella because with said spinning machines a cheese having very short fibers is obtained.

The spinning machines of the applicant working with steam avoid these drawbacks, wherein in consequence of the "batch" or discontinuous working mode, said spinning machines have themselves a discontinuous production.

### Summary of the invention

The main aim of the present invention is that of showing a method and a system for the continuous production with steam of fresh pasta filata cheese, as mozzarella and the like which method and system avoid the drawbacks and disadvantages of the known methods and spinning machines and are able to increase the spinning machines productivity and to produce a fresh paste filata cheese having substantially constant features.

It is likewise an aim of the invention to suggest a method and a system allowing a more intensive manipulation action onto the curd as well as, and this within the framework of a continuous production, also an inside recirculation of the treated curd.

The above mentioned aims are obtained, in relation to the method, with a method having the features of claim 1 and, in relation to the system, with a system having the features of claim 9.

Further developments of the invention concerning both the method and the system are set fourth in the respective dependent claims. With the method and the system according to the invention several and important advantages are obtained.

First of all a continuous working mode with water steam is proposed which allows to operate on the curd manipulation or handling with different operative modes, included a curd recirculation, so that a fresh pasta filata cheese like mozzarella and the like is obtained, which has an optimized consistency and is ready for possible further treatments or processing steps. With respect to the known spinning machines working batch-wise and with steam the productivity is noticeably increased. An intensive curd manipulation action is obtained, which is also adjustable by using a counter-pressure which is obtained in a uniform way by means of the force of gravity onto the surface of the curd pushed upward.

Even if, when necessary, small water quantities introduced into the curd may be used which water quantities may have an adjustable temperature which may be chosen, said water quantities will be completely incorporated into the curd and in the produced cheese, so that the known whey disposing and pollution problems are avoided.

A quick incorporation of the steam and, if provided, of water into the curd is obtained by using steam and water jets inclined from the top downward onto the curd.

### Brief description of the drawings

Additional features, advantages and details of the method and system according to the invention for the continuous production with steam of fresh pasta filata cheese, like mozzarella and the like will be further apparent from the following description of the method and a preferred exemplary embodiment of the system according to the invention which is schematically shown in the accompanying drawings in which
Fig. 1 is a frontal view of the system according to the invention in which with continuous lines are also shown internal components which are necessary for a better understanding of the invention,
Fig. 2 is a top view of the system of Fig. 1,
Fig. 3 is an enlarged view of the vertical manipulation column, and
Fig. 4 is an horizontal cross-section through the vertical manipulation column along the line IV-IV in Fig. 1.

### Description of the preferred embodiment

In the different figures equal parts are denoted by equal reference numbers.

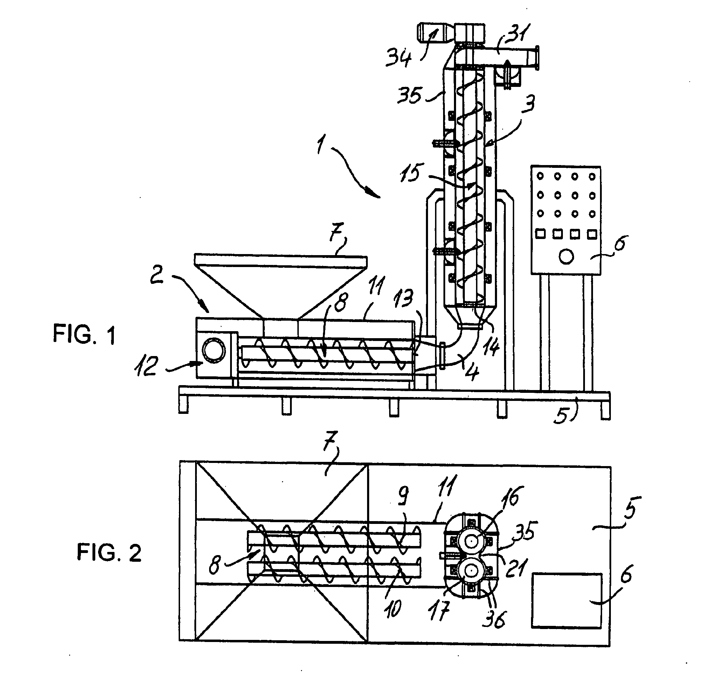

As inferable from Fig. 1 the system according to the invention for the continuous production with steam of fresh pasta filata cheese has a curd feeder 2 under pressure and a vertical manipulation column 3, wherein said feeder 2 and said manipulation, or handling column 3 are fluidically connected together at the opposite ends thereof by means of a connecting union 4 as shown in more details in the following.

The reference number 5 denotes a bed-plate of the system 1 and the reference number 6 indicates a control and adjustment panel 5 adapted for choosing a desired adjustable production method in co-operation with a software having specific programmable programs.

In more details said feeder 2 has an hopper 7 for introducing a curd and a couple 8 of screws 9, 10 which are supported horizontally and parallel in a tank or jacket 11 and are connected with an associated electric geared motor 12. The reference number 13 indicates the outlet of said feeder 2 which by means of said connecting union 4 is fluidically connected with the inlet 14 of said vertical manipulation column 3.

After the first feeding step, carried out under pressure, of the curd from the feeder 2 into the vertical manipulation column 3 the curd will be here manipulated as illustrated in the following.

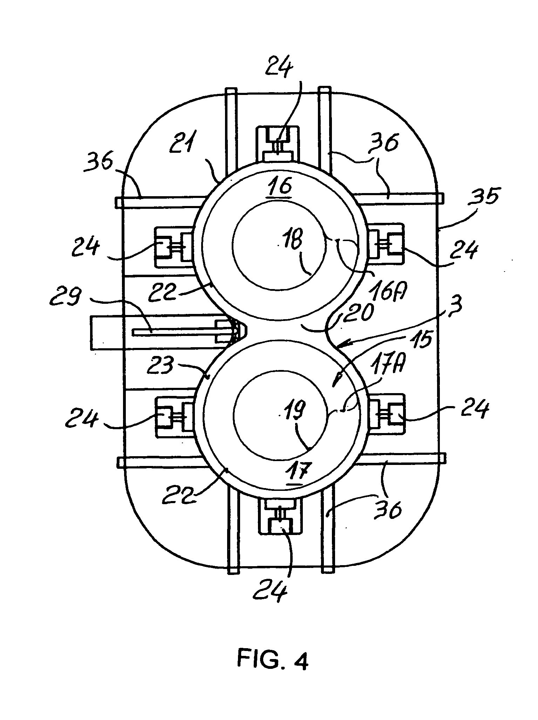

In the shown embodiment the vertical manipulation column 3 comprises a couple 15 of manipulation screws 16, 17 (Fig. 4) which are supported by means of hollow rotation shafts 18, 19 and are parallel to each other and with respect to the longitudinal extension of the vertical treatment column 3.

From Fig. 4 is further inferable that said screws 16, 17 are placed at a small distance to each other which distance is adapted to create a narrow vertical manipulation chamber 20 in the abutment zone of both screws 16, 17 the initial parts thereof are denoted with 16A and 17A. From Fig. 4 is further inferable that said screws 16 and 17 are not housed in a traditional container having large dimensions but are housed in a jacket 21 which is here 8-like profiled and defines with the external edge 22 of said screws 16 and 17 a narrow circumferential squeezing air space 23.

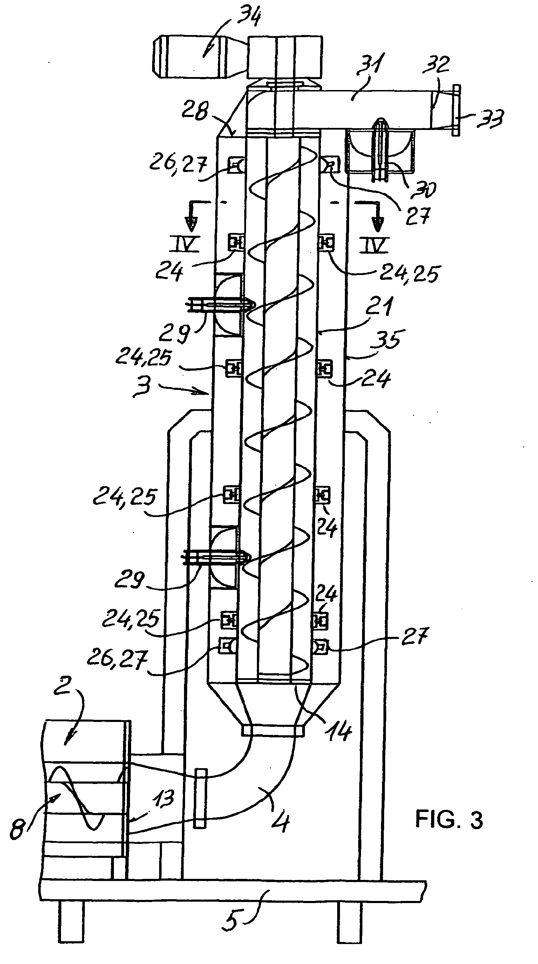

In the Figures 3 and 4 is further shown that in said jacket 21 along the height of the vertical manipulation column 3 is housed a plurality of nozzles 24 adapted to inject steam under pressure into the curd which nozzles are placed circumferentially around said profiled jacket 21 in several horizontal planes 25, wherein in the shown example are provided six nozzles 24 placed respectively circumferentially in a respective horizontal plane 25, and four horizontal planes 24 vertically spaced from each other, for example in an equally spaced way.

From the Fig. 3 is further inferable that are preferably provided further two planes 26 of nozzles 27 which latter are adapted to provide a calibrated water injection into the curd, wherein said two planes 26 of nozzles 27 for water are placed the one near the inlet 14 of said manipulation column 3 and the other near the top end 28 of said manipulation column 3.

From the Figure 3 and 4 is further inferable that into said profiled jacket 21 are housed two thermal feelers 29 able to measure the local curd temperature, wherein a third thermal feeler 30 is housed in the discharging duct 31 of said jacket 21, which discharging duct is provided with a discharging opening 32 which is preferably closable by means of a diaphragm 33 having an adjustable discharging opening 33 which may be manually or automatically controlled as described in the following.

The reference number 34 denotes the geared motor unit driving the couple of manipulation screws 16 and 17, wherein said screws 16 and 17 may be driven on choice with equal or opposite rotation directions.

The nozzles 24 for steam and the nozzles 27 for water are preferably of the type having an outgoing jet directly inclined downward, wherein said nozzles 24 and 27 can have any desired conformation. Said nozzles are connected with a steam circuit, or respectively with a water circuit, comprising not shown manifolds having a plurality of outlets for the independent control of the nozzles for steam and the nozzles for water in the different nozzles planes 25 and 26.

Said driving unit or geared motor 34 also comprises a speed variator for varying the speed of said two screws 16 and 17 in said vertical manipulation column 3.

Furthermore in several figures the reference number 35 denotes a protection jacket 35 fixed to said profiled jacket 21 by means of tension rods 36.

### Working

In the apparatus 1 according to the invention the proposed method is carried out according to the following working mode:
The curd introduced into the feeder is continuously and under pressure fed through the couple 8 of screws, in an adjustable manner, into the handling or manipulation column 3 through the union 4.

According to the invention into the manipulation column 3 the curd is manipulated with the couple 15 of handling or manipulation screws 16, 17 by means of a thrust on the curd which thrust is directed upward in opposition to the downward thrust action onto the curd which is automatically carried out by the force of gravity.

It is apparent that the counter-pressure condition that is caused onto the curd mass carries out onto said curd a more intensive manipulation action which leads to a better formation of long fibers into the curd which is turning in fresh pasta filata cheese in the last part of the vertical manipulation column.

According to the invention during the curd manipulation takes place a steam introduction in the latter, in an adjustable quantity and pressure, through the nozzles 24 in the single planes 25, in function of the typical procedural modes in the production of fresh pasta filata cheeses and of the local temperatures measured into the curd "column" by the thermal feelers 29 and 30.

According to the invention during the second curd manipulation step into said vertical manipulation column 3 additionally to the steam inlet is also provided, as an expedient for the adjustment of the curd consistency, the injection into the latter of specific and pre-calculated small water quantities through said nozzles 27 in the planes 26 which latter are provided for example at the beginning and at the end of the vertical manipulation column 3. Said water quantities will be in any case pre-calculated in such a manner that they will be completely incorporated into the curd and, therefore, will not create the known pollution and "whey" disposing problems as known with the spinning machines working with water.

According to the teaching of the invention in addition to the adjustments of the steam quantities and pressures as well as to the curd temperatures it is further possible to adjust the consistency of the curd and the produced cheese also acting on further working parameters, that is:
- by varying the speed of the manipulation screws 16 and 17 rotating in the same direction, wherein it is in this manner possible to adjust the curd thrust upward along the perimetrical air space 23 and the squeezing chamber 20 in counteraction to the gravity force,
- by deciding the directions of rotation of the manipulation screws 16 and 17, wherein with opposite directions of rotation of the screws 16 and 17 is caused a recirculation of the curd along said screws 16 and 17 with a consequent prolongation of the curd manipulation time, and this in the framework of a continuous working,
- by injecting into the curd predetermined water quantities which at last will be totally incorporable into the curd and the produced fresh pasta filata cheese,
- by varying the opening size of the discharging diaphragm 33, wherein a reduction of the latter causes a greater pressure on the curd inside said manipulation column 3, and on the contrary an enlargement of said diaphragm causes a reduction of said pressure.

As to the working mode according to the invention it is further possible to feed into the vertical manipulation column 3 liquids or suspensions containing additives, as for example integrators, coloring agents, milk proteins, caseins, correcting salts, that is melting salts and the like, and this preferably by using for example the already provided steam feeding circuits.

Furthermore, even if the foreseen working pressure inside said vertical manipulation column 3 is lower than 0,5 bar, according to the invention may be foreseen a safety means in the discharging zone 31, for example a not shown pressure switch and/or a safety valve.

From the above structural and functional description of the system 1, as well as of the method according to the invention it is easily apparent that with said system and method the stated aims are efficiently reached and the mentioned advantages are obtained, in particular a continuous working, a sensible increasing of the productivity, several adjustment possibilities of several parameters during the curd manipulation step and, therefore, a fresh pasta filata cheese as mozzarella and the like having substantially constant features.

In practicing the invention those skilled in the art could introduce several modifications and variations, as for example to foreseen a different curd feeding phase into the vertical manipulation column, to foreseen a disposal of said manipulation column more or less oblique with respect to the vertical (however with simultaneous reduction and irregularities of the gravity action), to foreseen in said vertical manipulation column only one manipulation screw (which latter, however, will provide a reduced efficiency and fewer possibilities concerning the manipulation adjustments), as well as to foreseen a jacket housing said manipulation screws having a shape different from the illustrated one, to foreseen a different conformation of the vertical column outlet, to foreseen a different arrangement and conformation of the manipulation elements inside the feeder and inside the vertical column, and so on, without leaving the scope of the present invention as described and defined in the following claims.

## Claims

1. Method for the continuous production with steam of fresh pasta filata cheese, like mozzarella and the like, comprising curd feeding in a curd manipulation apparatus
**characterized in that**
- in a first step in said manipulation apparatus, working like a curd feeder, curd is fed under pressure to a second manipulation step which is carried out in a substantially vertical manipulation column along a substantially vertical manipulation path, wherein by a simultaneous use of the force of gravity a pressure acting onto the curd is obtained counteracting the upward thrust carried out onto said curd,
- in said second manipulation step are carried out pre-calculated injections of steam quantities into said curd in several points along said substantially vertical manipulation path as well as in function of the curd temperatures measured in several points along said substantially vertical manipulation path and preferably near a discharging opening for the produced fresh pasta filata cheese, and
- a plurality of different operational possibilities for acting onto said curd in said second manipulation step are provided.

2. Method according to claim 1, **characterized in that**, if necessary, in said manipulation step are also carried out pre-calculated injections of water quantities into said curd in several points along said substantially vertical manipulation path in function for example of said curd temperatures measured in several points along said substantially vertical manipulation path and preferably near said discharging opening for the produced fresh pasta filata cheese.

3. Method according to claim 1, **characterized in that** during the vertical transport step may be varied said discharging opening for the produced fresh pasta filata cheese.

4. Method according to claim 1, **characterized in that** during said vertical manipulation step the transport speed of the manipulated curd may be varied by varying the speed of the screws rotating with equal direction of rotation, and **in that** when driving said screws with opposite rotation directions an internal curd recirculation along the screw length takes place so that the curd manipulation time may be varied.

5. Method according to claim 1, **characterized in that** during said vertical manipulation step said steam and/or water injections into said curd are carried out in a plurality of points placed in horizontal planes which are vertically spaced along said vertical manipulation path, wherein the steam and/or water jets are preferably slanting with respect to the vertical.

6. Method according to claim 1, **characterized in that** the steam and/or water delivery into said curd is singularly adjustable in each plane of said steam and/or water injection points.

7. Method according to claim 1, **characterized in that** in said vertical manipulation path the curd transport is carried out in a jacket, housing manipulation screws, inside a small perimetrical, air space and a narrow squeezing chamber in the abutment area of said manipulation screws.

8. Method according to one or more of the preceding claims, **characterized in that** it is further possible to feed into the vertical manipulation column (3) liquids or suspensions containing additives, as for example integrators, coloring agents, milk proteins, caseins, correcting salts, that is melting salts and the like, and this preferably by using for example the already provided steam feeding circuits.

9. System for the continuous production of fresh pasta filata cheese, like mozzarella and the like, with the continuous method working with steam according to one or more of the claims 1 to 8, **characterized by** the fact of comprising
- a curd feeder (2) comprising for example a couple of rotating feeding screws (9, 10) housed in a jacket, wherein said curd feeder (2) is adapted to continuously deliver curd under pressure from the outlet (13) thereof, and
- a curd manipulation column (3) which is placed substantially vertically has a jacket (21) housing a couple (15) of manipulation screws (16, 17) and is fluidically connected with its inlet (14) with said outlet (13) of said curd feeder (2) whereas the upper end (28) of said curd manipulation jacket (3) is fluidically connected with a discharging duct (31) for the produced fresh pasta filata cheese provided with a discharging opening (32) which latter is preferably provided with an associated diaphragm (33) having a variable opening size, wherein said manipulation screws (16, 17) are placed in abutment with a small abutment distance defining a narrow squeezing chamber (20) and may be rotatably driven on choice with equal or opposite rotating directions,
- a plurality of nozzles (24) injecting steam under pressure which are perimetrically spaced in said manipulation jacket (21), preferably on more horizontal planes (25) which are vertically spaced from each other,
- a plurality of nozzles (27) injecting pre-calculated quantities of water which are perimetrically spaced in said manipulation jacket (21), preferably in more horizontal planes (25) which are vertically spaced from each other,
- a plurality of thermal feelers (29) which are spread on several points of said manipulation jacket (21) and adapted to measure the local curd temperature.

10. System according to claim 9, **characterized in that** said manipulation jacket (21) housing said couple (15) of manipulation screws (16, 17) is profiled and envelops 8-like said both manipulation screws (16, 17) with a small circumferential air space (23).

11. System according to claim 9, **characterized in that** for example four horizontal planes (25) having nozzles (24) ejecting steam under pressure are provided, wherein each plane (25) is in turn provided with for example six nozzles (24) spread on the perimeter of said profiled manipulation jacket (21), and **in that** for example two horizontal planes (26) are provided having nozzles (27) ejecting water under pressure, wherein each plane (26) is provided with for example six nozzles (27) spread on the perimeter of said manipulation profiled jacket (21).

12. System according to claim 9, **characterized in that** three thermal feelers (29) are provided which are preferably so distributed that a first thermal feeler (29) is placed between the first couple of planes (25) having steam nozzles (24), a second thermal feeler (29) is placed between said couple of planes (25) having steam nozzles (24) at the top (28) of said vertical column (3), and the third thermal feeler (30) is placed near said discharging opening (32) for discharging the fresh pasta filata cheese coming from said vertical column (3).

13. System according to claim 11, **characterized in that** said two planes (26) having water ejecting nozzles (27) are provided the one near said inlet (14) of said vertical column (3) and the other near said top (28) of the latter (3).

14. System according to claim 9, **characterized in that** said vertical column (3) is surrounded with a distance from a protection jacket (35) which is secured to said vertical manipulation jacket (3) by means of tension rods or the like.

15. System according to one or more of the preceding claims 9 to 14, **characterized in that** a safety means is provided in the discharging zone (31), for example a pressure switch and/or a safety valve.

## Patentansprüche

1. Verfahren zur kontinuierlichen Herstellung von frischem Pasta-Filata-Käse wie Mozzarella u. ä. mit Dampf und einem Fördern eines Strangs oder Curds (im Folgenden "Curd") in einer Bearbeitungsvorrichtung, **dadurch gekennzeichnet, dass**
- in einem ersten Verfahrensschritt in der Bearbeitungsvorrichtung mit einer Arbeitsweise wie eine Förder-oder Beschickungsvorrichtung für den Curd der Curd unter Druck zu einem zweiten Bearbeitungs-Verfahrensschritt gefördert wird, der in einer grundsätzlich vertikalen Bearbeitungs-Säule entlang eines grundsätzlich vertikalen Bearbeitungs-Pfades ausgeführt wird, wobei durch den gleichzeitigen Einsatz oder das Einwirken der Schwerkraft ein Druck, der auf den Curd wirkt, erhalten wird, der der aufwärts gerichteten Beanspruchung oder dem Axialdruck entgegenwirkt, der auf den Curd wirkt,
- in dem zweiten Bearbeitungs-Verfahrensschritt vorbestimmte oder vorberechnete Injektionen von Dampfmengen in den Curd an mehreren Punkten entlang des substantiell vertikalen Bearbeitungs-Pfades ebenso wie in Abhängigkeit oder als Funktion der Temperaturen des Curds gemessen an mehreren Punkten entlang des grundsätzlich vertikalen Bearbeitungs-Pfades, und vorzugsweise nahe einer Abgabeöffnung für den produzierten frischen Pasta-Filata-Käse, vorgenommen oder eingebracht werden, und
- eine Mehrzahl von untarschiedlichen Betriebsmöglichkeiten für ein Einwirken auf den Curd in dem zweiten Bearbeitungs-Verfahrensschritt bereitgestellt werden.

2. Verfahren nach Anspruch 1, **dadurch gekennzeichnet, dass**, sofern erforderlich, in dem zweiten Bearbeitungs-Verfahrensschritt auch vorbestimmte oder vorberechnete Injektionen von Wassermengen in den Curd vorgenommen oder eingebracht werden, was an mehreren Punkten entlang des grundsätzlich vertikalen Veränderungs-Pfades als Funktion beispielsweise der Temperaturen des Curds gemessen an mehreren Punkten entlang des grundsätzlich vertikalen Bearbeitungs-Pfades, und vorzugsweise nahe der Abgabeöffnung des hergestellten frischen Pasta-Filata-Käses, erfolgt.

3. Verfahren nach Anspruch 1, **dadurch gekennzeichnet, dass** während des vertikalen Transport-Verfahrensschrittes die Abgabeöffnung für den hergestellten frischen Pasta-Filata-Käse verändert werden kann.

4. Verfahren nach Anspruch 1, **dadurch gekennzeichnet, dass** während des vertikalen Bearbeitungs-Verfahrensschrittes die Transportgeschwindigkeit des bearbeiteten Curds durch Veränderung der Geschwindigkeit von Schrauben, die mit gleicher Rotationsrichtung rotieren, verändert werden kann, und dass bei Antrieb der Schrauben mit entgegengesetzten Rotationsrichtungen eine interne Rezirkulation des Curds entlang der Schraubenlänge stattfindet, so dass die Bearbeitungszeit des Curds verändert werden kann.

5. Verfahren nach Anspruch 1, **dadurch gekennzeichnet, dass** während des vertikalen Bearbeitungs- Verfahrensschrittes die Injektionen des Dampfs und/oder des Wassers in den Curd erfolgen an einer Mehrzahl von Punkten, die in horizontalen Ebenen angeordnet sind, die vertikal entlang des vertikalen Veränderungs-Pfades beabstandet sind, wobei die Dampf- und/oder Wasserströme vorzugsweise gegenüber der Vertikalen geneigt sind.

6. Verfahren nach Anspruch 1, **dadurch gekennzeichnet, dass** die Überbringung oder Zufuhr von Dampf und/oder Wasser in den Curd einzeln einstellbar ist in jeder Ebene der Dampf- und/oder Wasser-Injektionspunkte.

7. Verfahren nach Anspruch 1, **dadurch gekennzeichnet, dass** der Transport des Curds in dem vertikalen Bearbeitungs-Pfad in einer Ummantelung erfolgt, die die Bearbeitungs-Schrauben aufnimmt, was innerhalb eines kleinen Umfangs-Luftraums und einer engen Quetschkammer in dem angrenzenden Bereich der Bearbeitungs-Schrauben erfolgt.

8. Verfahren nach einem oder mehreren der vorhergehenden Ansprüche, **dadurch gekennzeichnet, dass** es auch möglich ist, in der vertikalen Bearbeitungs-Säule (3) Flüssigkeiten oder Suspensionen mit Additiven, wie beispielsweise Integratoren, farbgebende Mittel, Milchproteine, Kaseine, korrigierende Salze, insbesondere schmelzende Salze und ähnliches, zuzuführen, und dass dies vorzugsweise erfolgt durch Einsatz von beispielsweise den bereits vorhandenen Förderkreisen für Dampf.

9. System zur kontinuierlichen Herstellung von frischem Pasta-Filata-Käse wie Mozzarella und ähnliche Käse, mit dem kontinuierlichen Verfahren, welches mit Dampf arbeitet, entsprechend mindestens einem der Ansprüche 1 bis 8, **dadurch gekennzeichnet, dass**
- ein Curd-Förderer (2) beispielsweise mit einem Paar rotierender fördernder Schrauben (9, 10), die in einer Ummantelung aufgenommen sind, wobei der Curd-Förderer (2) geeignet gestaltet für eine kontinuierlichen Überbringung des Curds unter Druck aus dem Auslass (13) und
- eine Bearbeitungs-Säule (3) für den Curd, die im Wesentlichen vertikal angeordnet ist, eine Ummantelung (21) besitzt, die ein Paar (15) bearbeitender Schrauben (16, 17) aufnimmt, und die fluidisch mit ihrem Einlass (14) mit dem Auslass (13) des Förderers (2) für den Curd verbunden ist, wobei das obere Ende (28) der Ummantelung (3) zur Bearbeitung des Curds fluidisch mit einem Abgabe-Durchgangh (31) für den hergestellten frischen Pasta-Filata-Käse verbunden ist, der mit einer Abgabeöffnung (32) ausgestattet ist, die vorzugsweise mit einer zugeordneten Membran (33) mit veränderbarer Öffnungsgröße ausgestattet ist, wobei die Schrauben (16, 17) zur Bearbeitung aneinander angrenzend angeordnet sind mit einem kleinen Abstand, der eine enge Quetschkammer (20) definiert, und die Schrauben (16, 17) wahlweise rotatorisch mit gleichen oder entgegengesetzten Rotationsrichtungen angetrieben werden können,
- mehrere Düsen (24), die Dampf unter Druck einspritzen und die in Umfangsrichtung beabstandet in der Ummantelung (21) angeordnet sind, und vorzugsweise auf mehreren horizontalen Ebenen (25) angeordnet sind, die vertikal voneinander beabstandet sind,
- eine Mehrzahl von Düsen (27), die vorbestimmte Mengen an Wasser injizieren, die in Umfangsrichtung beabstandet in der Ummantelung (21) angeordnet sind, und vorzugsweise in mehreren horizontalen Ebenen (25) angeordnet sind, die vertikal voneinander beabstandet sind,
- mehrere thermische Fühler (29), die auf mehrere Punkte der Ummantelung (21) verteilt sind und geeignet zur Messung der lokalen Temperatur des Curds gestaltet sind,
vorhanden sind.

10. System nach Anspruch 9, **dadurch gekennzeichnet, dass** die Ummantelung (21), die ein Paar (15) Schrauben (16, 17) zur Veränderung aufnimmt, profiliert ist und 8-förmig die beiden Schrauben (16, 17) mit einem kleinen Umfangs-Luftspalt (23) umhüllt.

11. System nach Anspruch 9, **dadurch gekennzeichnet, dass** beispielsweise vier horizontale Ebenen (25), die Düsen (24) besitzen, die Dampf unter Druck ausbringen, vorhanden sind, wobei jede Ebene (25) wiederum ausgestattet ist mit beispielsweise sechs Düsen (24), die über dem Umfang der profilierten Ummantelung (21) verteilt sind, und dass beispielsweise zwei horizontale Ebenen (26) vorhanden sind, die Düsen (27) besitzen, die unter Druck Wasser ausbringen, wobei jede Ebene (26) mit beispielsweise sechs Düsen (27) ausgestattet ist, die auf dem Umfang der profilierten Ummantelung (21) verteilt sind.

12. System nach Anspruch 9, **dadurch gekennzeichnet, dass** drei thermische Fühler (29) vorhanden sind, die vorzugsweise so verteilt sind, dass ein erster thermischer Fühler (29) zwischen dem ersten Paar Ebenen (25) mit Dampf-Düsen (24) angeordnet ist, ein zweiter thermischer Fühler (29) zwischen dem Paar Ebenen (25) mit Dampf-Düsen (24) an der Oberseite (28) der vertikalen Säule (3) angeordnet ist und der dritte thermische Fühler (30) nahe der Abgabeöffnung (32) zur Abgabe des frischen Pasta-Filata-Käses, der von der vertikalen Säule (3) kommt, angeordnet ist.

13. System nach Anspruch 11, **dadurch gekennzeichnet, dass** zwei Ebenen (26), die Wasser ausbringende Düsen (27) besitzen, vorhanden sind, wobei eine Ebene nahe dem Einlass (14) der vertikalen Säule (3) ist und die andere Ebene nahe der Oberseite (28) der vertikalen Säule (3) ist.

14. System nach Anspruch 9, **dadurch gekennzeichnet, dass** die vertikale Säule (3) mit einem Abstand von einer schützenden Ummantelung (35) umgeben ist, die an der vertikalen Ummantelung (3) mittels Spannstangen und ähnlichem gesichert oder befestigt ist.

15. System nach einem oder mehreren der vorhergehenden Ansprüche 9 bis 14, **dadurch gekennzeichnet, dass** ein Sicherheitsmittel in der Abgabezone (31) vorhanden ist, beispielsweise ein Druckschalter und/oder ein Sicherheitsventil.

## Revendications

1. Procédé pour la production continue à la vapeur de fromage frais à pâte filée, comme la mozzarella et similaire, comprenant l'introduction de caillé dans un appareil de manipulation de caillé, **caractérisé en ce que**:
dans une première étape, dans ledit appareil de manipulation fonctionnant comme un dispositif d'alimentation de caillé, le caillé est alimenté sous pression à une deuxième étape de manipulation qui est réalisée dans une colonne de manipulation sensiblement verticale le long d'une trajectoire de manipulation sensiblement verticale, dans lequel grâce à l'utilisation simultanée de la force de la gravité, on obtient une pression agissant sur le caillé en antagonisme avec la poussée vers le haut exercée sur ledit caillé,
dans ladite deuxième étape de manipulation, on réalise des injectons pré-calculées de quantités de vapeur dans ledit caillé en divers points le long de ladite trajectoire de manipulation sensiblement verticale ainsi qu'en fonction des températures de caillé mesurées en plusieurs points le long de ladite trajectoire de manipulation sensiblement verticale et de préférence à proximité d'une ouverture de décharge pour le fromage frais à pâte filée produit, et
on prévoit une pluralité de différentes possibilités opérationnelles pour agir sur ledit caillé dans ladite deuxième étape de manipulation.

2. Procédé selon la revendication 1, **caractérisé en ce que**, si nécessaire, dans ladite étape de manipulation, on réalise également des injections pré-calculées de quantités d'eau dans ledit caillé en divers points le long de ladite trajectoire de manipulation sensiblement verticale, par exemple, en fonction desdites températures de caillé mesurées en différents points le long de ladite trajectoire de manipulation sensiblement verticale et de préférence à proximité de ladite ouverture de décharge pour le fromage frais à pâte filée produit.

3. Procédé selon la revendication 1, **caractérisé en ce que** pendant l'étape de transport vertical, il est possible de modifier ladite ouverture de décharge pour le fromage frais à pâte filée produit.

4. Procédé selon la revendication 1, **caractérisé en ce que** pendant ladite étape de manipulation verticale, la vitesse de transport du caillé manipulé peut être modifiée en modifiant la vitesse des vis tournant dans le même sens de rotation, et **en ce que** lorsque l'on entraîne lesdites vis avec des sens de rotation opposés, on assiste à une recirculation interne du caillé le long de la longueur de la vis de sorte que le temps de manipulation du caillé peut être modifié.

5. Procédé selon la revendication 1, **caractérisé en ce que** pendant ladite étape de manipulation verticale, lesdites injections de vapeur et/ou d'eau dans ledit caillé sont réalisées en une pluralité de points placés dans des plans horizontaux qui sont verticalement espacés le long de ladite trajectoire de manipulation verticale, dans lequel les jets de vapeur et/ou d'eau sont de préférence obliques par rapport à la verticale.

6. Procédé selon la revendication 1, **caractérisé en ce que** la distribution de vapeur et/ou d'eau dans ledit caillé est réglable individuellement dans chaque plan desdits points d'injection de vapeur et/ou d'eau.

7. Procédé selon la revendication 1, **caractérisé en ce que** dans ladite trajectoire de manipulation verticale, le transport du caillé est réalisé dans une chemise, logeant des vis de manipulation, à l'intérieur d'un petit espace d'air périmétral et une chambre de compression étroite dans la zone de butée desdites vis de manipulation.

8. Procédé selon une ou plusieurs des revendications précédentes, **caractérisé en ce qu'**il est en outre possible d'alimenter dans la colonne de manipulation verticale (3), des liquides ou des suspensions contenant des additifs comme par exemple des intégrateurs, des agents colorants, des protéines de lait, des caséines, des sels correcteurs, c'est-à-dire des sels de fusion et similaires, et ceci de préférence en utilisant par exemple les circuits d'alimentation de vapeur déjà prévus.

9. Système pour la production continue de fromage frais à pâte filée, comme la mozzarella et similaire, avec le procédé continu fonctionnant avec de la vapeur selon une ou plusieurs des revendications 1 à 8, **caractérisé en ce qu'**il comprend:
un dispositif d'alimentation de caillé (2) comprenant par exemple une paire de vis d'alimentation (9, 10) rotatives logées dans une chemise, dans lequel ledit dispositif d'alimentation de caillé (2) est adapté pour distribuer de manière continue du caillé sous pression par sa sortie (13), et
une colonne de manipulation de caillé (3) qui est placée sensiblement verticalement, a une chemise (21) logeant une paire (15) de vis de manipulation (16, 17) et est raccordée de manière fluide avec son entrée (14) à ladite sortie (13) dudit dispositif d'alimentation de caillé (2) alors que l'extrémité supérieure (28) de ladite chemise de manipulation de caillé (3) est raccordée de manière fluide à un conduit de décharge (31) pour le fromage frais à pâte filée produit avec une ouverture de décharge (32), laquelle dernière est de préférence prévue avec un diaphragme (33) associé ayant une taille d'ouverture variable, dans lequel lesdites vis de manipulation (16, 17) sont placées en butée avec une petite distance de butée définissant une chambre de compression étroite (20) et peuvent être entraînées de manière rotative au choix dans les mêmes sens de rotation ou dans des sens de rotation opposés,
une pluralité de buses (24) injectant de la vapeur sous pression qui sont espacées de manière périmétrale dans ladite chemise de manipulation (21), de préférence sur plusieurs plans horizontaux (25) qui sont verticalement espacés les uns des autres,
une pluralité de buses (27) injectant des quantités pré-calculées d'eau qui sont espacées de manière périmétrale dans ladite chemise de manipulation (21), de préférence dans plusieurs plans horizontaux (25) qui sont verticalement espacés les uns des autres,
une pluralité de sondes thermiques (29) qui sont réparties sur plusieurs points de ladite chemise de manipulation (21) et adaptées pour mesurer la température locale du caillé.

10. Système selon la revendication 9, **caractérisé en ce que** ladite chemise de manipulation (21) logeant ladite paire (15) de vis de manipulation (16, 17) est profilée et enveloppe selon la forme de 8 lesdites deux vis de manipulation (16, 17) avec un petit espace d'air circonférentiel (23).

11. Système selon la revendication 9, **caractérisé en ce que**, par exemple, on prévoit quatre plans horizontaux (25) ayant des buses (24) éjectant de la vapeur sous pression, dans lequel chaque plan (25) est à son tour prévu, par exemple, avec six buses (24) reparties sur le périmètre de ladite chemise de manipulation (21) profilée et **en ce que**, par exemple, on prévoit deux plans horizontaux (26) ayant des buses (27) éjectant de l'eau sous pression, dans lequel chaque plan (26) est prévu, par exemple, avec six buses (27) réparties sur le périmètre de ladite chemise de manipulation (21) profilée.

12. Système selon la revendication 9, **caractérisé en ce que** l'on prévoit trois sondes thermiques (29) qui sont de préférence réparties de sorte qu'une première sonde thermique (29) est placée entre la première paire de plans (25) ayant des buses de vapeur (24), une deuxième sonde thermique (29) est placée entre ladite paire de plans (25) ayant des buses de vapeur (24) au niveau de la partie supérieure (28) de ladite colonne verticale (3) et la troisième sonde thermique (30) est placée à proximité de ladite ouverture de décharge (32) pour décharger le fromage frais à pâte filée venant de ladite colonne verticale (3).

13. Système selon la revendication 11, **caractérisé en ce que** lesdits deux plans (26) ayant des buses d'éjection d'eau (27) sont prévus l'un à côté de ladite entrée (14) de ladite colonne verticale (3) et l'autre à côté de ladite partie supérieure (28) de cette dernière (3).

14. Système selon la revendication 9, **caractérisé en ce que** ladite colonne verticale (3) est entourée avec une distance par rapport à une chemise de protection (35) qui est fixée sur ladite chemise de manipulation verticale (3), au moyen de câbles de tension ou similaires.

15. Système selon une ou plusieurs des revendications 9 à 14 précédentes, **caractérisé en ce que** l'ou prévoit des moyens de sécurité dans la zone de décharge (31), par exemple, un commutateur de pression et/ou une soupape de sécurité.
